# EUROPÄISCHE PATENTSCHRIFT

(11) **EP 3 980 746 B1**
(45) Veröffentlichungstag und Bekanntmachung des Hinweises auf die Patenterteilung: **14.05.2025**
(21) Anmeldenummer: 20731068.1
(22) Anmeldetag: 05.06.2020
(51) Int. Cl.: G01M 17/007, B60Q 1/04, F21S 41/141, F21S 41/19, F21S 45/40

(54) **DUMMY-ELEMENT MIT EINEM LEUCHTMITTEL**
DUMMY ELEMENT WITH A LAMP
ÉLÉMENT FACTICE ÉQUIPÉ D'UN MOYEN D'ÉCLAIRAGE

(30) Priorität: 07.06.2019 DE 102019115539
(43) Veröffentlichungstag der Anmeldung: 13.04.2022
(73) Patentinhaber: 4Activesystems GmbH, 8772 Traboch (AT)
(72) Erfinder: HAFELLNER, Reinhard, 8724 Spielberg (AT); FRITZ, Martin, 8723 Kobenz (AT)
(74) Vertreter: Dilg, Haeusler, Schindelmann Patentanwaltsgesellschaft mbH
(86) Internationale Anmeldenummer: PCT/EP2020/065665
(87) Internationale Veröffentlichungsnummer: WO 2020/245387

(56) Entgegenhaltungen:
- EP-A1- 3 242 120
- DE-A1- 102011 012 542
- GB-A- 2 530 307

## Beschreibung

### Technisches Gebiet

Die vorliegende Erfindung betrifft ein Dummy-Element, insbesondere ein Dummy Fahrzeug mit einem Leuchtmittel.

### Hintergrund der Erfindung

Zum Testen von Fahrerassistenzsystemen, insbesondere unter dem Gesichtspunkt des autonomen Fahrens, sind komplexe Verkehrssituationen abzubilden und zu simulieren. Dabei werden eine Vielzahl verschiedener Dummy-Elemente zueinander bewegt und insbesondere basierend auf GPS Daten gesteuert. Da zur Simulation komplexer Verkehrssituationen eine Vielzahl von Dummy-Elementen benötigt werden sowie häufig Unfälle zwischen einem Testfahrzeug und den Dummy-Elementen verursacht werden, müssen die Dummy-Elemente robust ausgebildet sein und auch nach einem Crash erneut wiederverwendet werden können.

Um Dummy-Elemente, insbesondere Fahrzeugdummys, realitätsnah zu simulieren, werden aktive Komponenten, wie beispielsweise die Beleuchtungsvorrichtungen, d.h. die Scheinwerfer oder Blinker eines Fahrzeugs, in einem Dummykörper eingebaut. Dabei weisen die Beleuchtungsvorrichtungen entsprechende rigide Gehäuse und Rahmen auf, in denen ein Leuchtmittel eingebaut ist, um realitätsnah eine Scheinwerfervorrichtung eines Fahrzeugs zu simulieren. Die entsprechenden Gehäuse und Rahmen werden in entsprechend großen Öffnungen in dem Dummy-Element eingebaut. Da die Gehäuse und Rahmen in der Regel härter als das Material des Dummykörpers ist, werden häufig Schäden am Dummykörper selbst sowie an dem Testfahrzeug, mit dem ein Unfall herbeigeführt wurde, verursacht.

EP 3 242 120 A1 beschreibt eine Kollisionszielattrappe. Diese Kollisionszielattrappe bildet ein Fahrzeug nach und ist für nicht destruktive Kollisionsversuche, insbesondere zum Testen von Fahrerassistenzsystemen, vorgesehen. Die Kollisionszielattrappe umfasst eine Leuchteinrichtung, welche eine Beleuchtung eines Fahrzeugs simuliert. Diese Leuchteinrichtung umfasst eine stabile Hüllstruktur, welche das Leuchtmittel der Leuchteinrichtung umschließt und bei einer Kollision vor Beschädigungen schützt.

In GB 2530307 A wird eine LED-Anordnung für eine Fahrzugbeleuchtung beschrieben. Die LED-Anordnung ist so ausgeführt, dass an der LED entstehende Wärme über eine Wärmesenke abgeführt werden kann. Zur Befestigung der LED in der LED-Anordnung wird ein thermisch leitfähiger Klebstoff eingesetzt.

DE 10 2011 012 542 A1 beschreibt eine Testvorrichtung und ein Verfahren zur Simulation und Nachbildung von verschiedenen Fahrsituationen. Dabei wird ein Zielobjekt mit einem Führungsseil verbunden und von diesem bewegt. Im Fall einer simulierten Kollision eines Versuchsfahrzeugs mit dem Zielobjekt wird das Zielobjekt von dem Führungsseil abgekoppelt, sobald ein Belastungsschwellwert überschritten ist.

### Darstellung der Erfindung

Es ist eine Aufgabe der vorliegenden Erfindung, eine Beleuchtungsvorrichtung robust und realitätsnah in einem Dummy-Element auszubilden.

Diese Aufgabe wird mit Merkmal des unabhängigen Anspruchs gelöst.

Gemäß einem ersten Aspekt wird ein Dummy-Element, insbesondere ein Dummy-Fahrzeug, beschrieben. Das Dummy-Element weist einen Dummykörper mit einem Beleuchtungsbereich, welcher eine zu simulierende Beleuchtungsvorrichtung eines zu simulierenden Elements, insbesondere eines Fahrzeugs, simuliert, auf. Ferner weist das Dummy-Element ein Leuchtmittel auf, welches gehäuselos ausgebildet ist, wobei der Dummykörper im Beleuchtungsbereich eine Öffnung aufweist, in welcher das Leuchtmittel angeordnet ist. Um das Leuchtmittel selbst sind kein Gehäuse und kein Rahmen, welche in der Öffnung vorliegen, ausgebildet.

Gemäß einer beispielhaften Ausführungsform ist das Dummy-Element ein Zweirad, ein Motorrad oder ein Fahrrad, ein Kraftfahrzeug, besondere ein Pkw oder ein Lkw, ein menschlicher Dummy oder ein tierischer Dummy.

Der Beleuchtungsbereich und das Leuchtmittel simulieren insbesondere Scheinwerfer, Blinker oder Bremslichter eines Fahrzeugs. Beispielsweise kann der Beleuchtungsbereich und das Leuchtmittel ebenfalls eine Stirnleuchte eines menschlichen Dummys simulieren.

Das Leuchtmittel ist gehäuselos bzw. rahmenlos ausgebildet. Unter gehäuselos bzw. rahmenlos wird insbesondere verstanden, dass um das Leuchtmittel selbst kein Gehäuse und kein Rahmen, welche in der Öffnung vorliegen, ausgebildet sind. In der Öffnung befindet sich ausschließlich das Leuchtmittel, wie beispielsweise eine LED oder Glühbirne. Aufgrund einer Verformung des Grundkörpers im Falle eines Aufpralls wird somit eine Beschädigung von starren Bauteilen eines Leuchtmittels, wie beispielsweise dessen Gehäuse oder dessen Rahmen, verhindert.

Der Dummykörper weist somit keine Ausbuchtung auf, in welcher üblicherweise eine Scheinwerfergehäuse oder ein Scheinwerferrahmen vorliegt, sondern lediglich eine kleinere Öffnung, in welcher ausschließlich das Leuchtmittel vorliegt.

Ferner können in dem Beleuchtungsbereich, insbesondere an dessen Oberfläche, Reflektoren oder Spiegelelemente angeordnet werden, beispielsweise mittels Klebens.

Gemäß einer beispielhaften Ausführungsform weist der Beleuchtungsbereich auf dessen Oberfläche graphische Konturen auf, welche z.B. einen Rahmen der zu simulierenden Beleuchtungsvorrichtung abbilden. Zur möglichst realen Simulation des Leuchtmittels können graphische Konturen den Rahmen oder das Gehäuse der zu simulierenden Beleuchtungsvorrichtung nachbilden.

Gemäß einer beispielhaften Ausführungsform ist das Leuchtmittel mittels einer Presspassung in der Öffnung befestigt.

Gemäß einer beispielhaften Ausführungsform bilden die Öffnung und das Leuchtmittel eine Spielpassung aus, sodass das Leuchtmittel schubladenartig in die Öffnung einschiebbar ist.

Gemäß einer beispielhaften Ausführungsform ist das Leuchtmittel mittels einer Klebeverbindung in der Öffnung befestigt.

Gemäß einer beispielhaften Ausführungsform ist das Leuchtmittel mittels eines Formschlusses in der Öffnung befestigt.

Gemäß einer beispielhaften Ausführungsform weist das Leuchtmittel einen Leuchtkörper und eine Platine auf, wobei der Leuchtkörper von der Platine hervorragt.

Gemäß einer beispielhaften Ausführungsform ist die Platine elastisch verformbar ausgebildet.

Zum Beispiel kann die Platine ein flexibles (insbesondere bedrucktes) Band oder flexible (insbesondere bedruckte) Folie sein, welche zum Beispiel elektronische Leiterbahnen und elektronische Komponenten (z.B. LED-Elemente) aufweisen. Die Platine kann somit elastisch oder flexibel bzw. plastisch verformbar ausgebildet werden. Kommt es z.B. zu einer Kollision zweier Dummykörper, so kann sich die verformbare Platine elastisch oder plastisch verformen, ohne dabei Schaden zu nehmen. Danach kann sich die verformbare Platine wieder in einen Ausgangszustand (Ausgangsform) bringen lassen. Im Rahmen dieses Dokuments kann unter dem Begriff "verformbar" also insbesondere eine Eigenschaft verstanden werden, aufgrund der sich ein Körper nach einer zu einer Verformung führenden Krafteinwirkung wieder in eine Ausgangsform zurückbringen lässt oder selbsttätig zurückbringt. Dies hat den Vorteil, dass z.B. im Rahmen eines Crash-Tests beschädigte Elemente eines Dummykörpers wiederverwendet werden können und derartige Tests somit effizient und günstig durchgeführt werden können.

Gemäß einer beispielhaften Ausführungsform ist die Platine innerhalb der Öffnung des Dummykörpers befestigt und der Leuchtkörper ragt aus der Öffnung heraus bzw. hervor. Mit anderen Worten kann die Öffnung als Bohrung in den Dummykörper vorgesehen werden, wobei die Platine in der Bohrung vorliegt und der Leuchtkörper im Bereich der Öffnung. Dabei kann der Leuchtkörper innerhalb der Öffnung vorliegen oder aus der Öffnung herausragen.

Wenn der Leuchtkörper aus der Öffnung hervorragt, hat das den Vorteil, dass ein realitätsnaher Lichtkegel erzeugt wird. Somit kann eine Simulation, für die der Dummykörper verwendet wird, verbessert werden.

Gemäß einer beispielhaften Ausführungsform weist die Öffnung in dem Dummykörper einen Austrittsbereich, durch welchen der Leuchtkörper (von dem Befestigungsbereich gesehen) nach außen ragt, und in dem Dummykörper einen Befestigungsbereich, an welchen die Platine vorliegt, auf.

Der Austrittsbereich wird innerhalb des Dummykörpers gebildet und beschreibt den Bereich innerhalb des Dummykörpers, in welchem der Leuchtkörper, beispielsweise die LED oder die LEDs, vorliegt.

Gemäß einer beispielhaften Ausführungsform weist die Öffnung in dem Dummykörper einen Austrittsbereich, in welchen der auf der Platine befestigte Leuchtkörper, insbesondere LED, hineinragt, und in dem Dummykörper einen Befestigungsbereich aufweist, in welchem die Platine vorliegt. Der Leuchtkörper liegt dabei vollständig innerhalb des Austrittsbereichs und ragt nicht aus der Öffnung in Richtung Umgebung heraus.

Die Öffnung kann in einer weiteren beispielhaften Ausführungsform als lichttransparente Öffnung verstanden werden. Dies bedeutet, dass der Austrittsbereich beispielsweise durch ein zusätzliches lichttransparentes Material gefüllt ist oder durch einen lichttransparenten Bereich des Dummykörpers abgedeckt ist. Licht der Leuchtkörper, insbesondere der LEDs, strahlt somit durch die geschlossene Öffnung des Dummykörpers in die Umgebung.

Gemäß einer beispielhaften Ausführungsform ist der Öffnungsdurchmesser des Austrittsbereichs kleiner als der Öffnungsdurchmesser des Befestigungsbereichs, sodass der Befestigungsbereich einen Hinterschnitt bildet, wobei der Dummykörper derart elastisch verformbar ausgebildet ist, dass die Platine durch den Austrittsbereich hindurchdrückbar ist und bei Vorliegen in dem Befestigungsbereich einen Formschluss zur Befestigung des Leuchtmittels ausbildet.

Gemäß einer beispielhaften Ausführungsform weist das Leuchtmittel mehrere Leuchtkörper, insbesondere LEDs, auf, die an der Platine gekoppelt (und insbesondere auf einer Oberfläche der Platine befestigt sind und von dieser hervorragen) sind, wobei die Öffnung in dem Dummykörper mehrere Austrittsbereiche aufweist, wobei in jedem Austrittsbereich einer der Leuchtkörper angeordnet ist.

Die Leuchtkörper liegen dabei vollständig innerhalb der entsprechenden Austrittsbereiche und ragen nicht aus der Öffnung bzw. den Austrittsbereichen in Richtung Umgebung des Dummykörpers heraus. Alternativ können die Leuchtkörper derart angeordnet sein, dass die Leuchtkörper sich durch die Austrittsbereiche hindurcherstrecken und aus der Öffnung in die Umgebung herausragen.

Gemäß einer beispielhaften Ausführungsform ist die Öffnung eine Durchgangsöffnung und verbindet einen Innenbereich des Dummykörpers mit der Oberfläche des Beleuchtungsbereichs, wobei das Leuchtmittel von innen durch die Öffnungen hindurchsteckbar ist.

Gemäß einer beispielhaften Ausführungsform weist das Leuchtmittel eine LED, insbesondere eine LED-Matrix, auf.

Gemäß einer beispielhaften Ausführungsform ist der Dummykörper ein geschäumter Kunststoff.

Gemäß einer beispielhaften Ausführungsform sind die graphischen Konturen mittels eines Farbmittels auf der Oberfläche des Beleuchtungsbereichs aufgetragen.

Gemäß einer beispielhaften Ausführungsform sind die graphischen Konturen mittels Aufklebern auf der Oberfläche des Beleuchtungsbereichs aufgetragen sind.

Gemäß einer beispielhaften Ausführungsform ist das Leuchtmittel Versorgungskabel aufweist, an welchen eine Energiequelle anschließbar.

Gemäß einer beispielhaften Ausführungsform weist das Leuchtmittel eine Batterie als Energiequelle auf.

Gemäß einer beispielhaften Ausführungsform weist das Leuchtmittel eine Induktionsspule auf, mittels welcher Energie für das Leuchtmittel zuführbar ist.

Gemäß einer beispielhaften Ausführungsform weist das Leuchtmittel einen Signaltransmitter auf, wobei der Signaltransmitter eingerichtet ist Steuersignale zur Steuerung des Leuchtmittels zu empfangen.

Gemäß einer beispielhaften Ausführungsform weist das Leuchtmittel einen Beschleunigungssensor auf, sodass Beschleunigungen und Verzögerungen messbar sind.

Gemäß einem weiteren Ausführungsbeispiel weist das Dummy-Element eine Kühlvorrichtung auf. Die Kühlvorrichtung kann auf der dem Leuchtkörper abgewandten Seite der Platine eine Kühlvorrichtung thermisch gekoppelt sein. Die Kühlvorrichtung kann zum Beispiel eine Wasserkühlung, eine Luftkühlung oder eine thermoelektrische Kühlung (insbesondere eine Peltier-Element) aufweisen. Auch kann die Kühlvorrichtung eine Kombination verschiedener Kühlungen vorteilhaft aufweisen. Die durch den Leuchtkörper produzierte Abwärme kann so effizient abgeführt werden. Dies hat den Vorteil, dass die Lebensdauer des Leuchtkörpers sowie der Platine verlängert wird und eine sichere und zuverlässige Nutzung eines Leuchtmittels, welches einen Leuchtkörper und/oder eine Platine aufweist, gewährleistet ist.

Die Kühlvorrichtung weist beispielsweise einen Kühlkörper auf, welcher lösbar, beispielsweise mittels einer Schraubverbindung, oder mittels einer Klebeverbindung an einer Seite der Platine befestigt und somit thermisch gekoppelt ist. Zwischen dem Kühlkörper und der Platine kann beispielsweise eine wärmeleitende Schicht, welche beispielsweise mittels einer Wärmeleitpaste gebildet wird, vorgesehen werden. Der Kühlkörper kann ferner Fluidleitungen aufweisen, durch welche ein Kühlmedium, wie beispielsweise eine Kühlflüssigkeit oder ein Kühlgas, befördert wird.

Gemäß einem weiteren Aspekt der vorliegenden Erfindung wird ein System zum Bewegen eines Dummy-Elements beschrieben. Das System weist ein oben beschriebenes Dummy-Element und eine verfahrbare Plattform auf, wobei das Dummy-Element auf der verfahrbaren Plattform befestigt ist.

Gemäß einer weiteren beispielhaften Ausführungsform des Systems weist das Dummy-Element eine erste Schnittstelle und die verfahrbare Plattform eine zweite Schnittstelle auf, wobei die erste Schnittstelle und die zweite Schnittstelle korrespondieren zueinander derart ausgebildet sind, dass besondere Datensignale oder Energie zwischen der Plattform und dem Dummy-Element austauschbar sind.

Die Schnittstellen können beispielsweise zum Übertragen von Energie zwischen dem Dummy-Element und der Plattform ausgebildet sein. So können die Schnittstellen beispielsweise korrespondierende Spulen ausbilden, sodass induktiv Energie übertragen werden kann. Ferner können die Schnittstellen elektrisch leitende Schleifkontakte ausbilden. Ferner können die Schnittstellen korrespondierende Stecker/Boxenverbindungen ausbilden. Ferner können die Schnittstellen zum Austausch von Datensignalen dienen, sodass beispielsweise Steuersignale für das Leuchtmittel übertragen werden können oder Zustandsdaten des Leuchtmittels an die Plattform übertragen werden.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung eines Ausschnitts eines Dummy-Elements, wobei die Öffnung als Durchgangsöffnung ausgebildet ist, gemäß einer beispielhaften Ausführungsform der vorliegenden Erfindung.
Fig. 2 eine schematische Darstellung eines Ausschnitts eines Dummy-Elements, wobei die Öffnung als Sackloch mit Hinterschnitt ausgebildet ist, gemäß einer beispielhaften Ausführungsform der vorliegenden Erfindung.
Fig. 3 eine schematische Darstellung eines Frontbereichs eines Autodummys, gemäß einer beispielhaften Ausführungsform der vorliegenden Erfindung.
Fig. 4 eine schematische Darstellung eines Frontbereichs eines Motorraddummys, gemäß einer beispielhaften Ausführungsform der vorliegenden Erfindung.
Fig. 5 und 6 schematische Darstellungen eines Ausschnitts eines Dummy-Elements, welches mehrere Öffnungen für Leuchtkörper aufweist gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

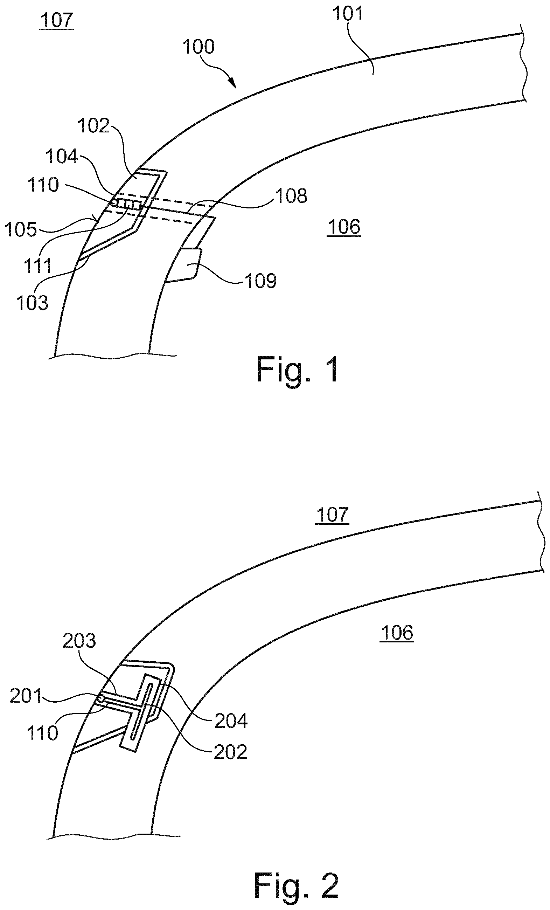

**Fig. 1** zeigt eine schematische Darstellung eines Ausschnitts eines Dummy-Elements 100, wobei die Öffnung 104 als Durchgangsöffnung ausgebildet ist. Das Dummy-Element 100 ist beispielsweise ein Kraftfahrzeug, wobei in Fig. 1 eine Schnittdarstellung des Frontbereichs dargestellt wird. Das Dummy-Element 100 weist einen Dummykörper 101 mit einem Beleuchtungsbereich 102 auf, welcher eine zu simulierende Beleuchtungsvorrichtung eines zu simulierenden Elements, insbesondere eines Fahrzeugs, simuliert. Der Beleuchtungsbereich 102 weist auf dessen Oberfläche graphische Konturen 103, welche einen Rahmen der zu simulierenden Beleuchtungsvorrichtung abbilden, und ein Leuchtmittel 110 auf. Das Leuchtmittel 110 ist gehäuselos ausgebildet. Der Dummykörper 101 weist im Beleuchtungsbereich 102 eine Öffnung 104 auf, in welcher das Leuchtmittel 110 angeordnet ist.

Der Beleuchtungsbereich 102 und das Leuchtmittel 110 simulieren insbesondere Scheinwerfer, Blinker oder Bremslichter eines Fahrzeugs.

Die Öffnung 104 ist z.B. eine Durchgangsöffnung und verbindet einen Innenbereich 106 des Dummykörpers 101 mit der Oberfläche 105 des Beleuchtungsbereichs 102, welche zur Umgebung 107 des Dummy-Elements 100 zeigt. Das Leuchtmittel 110 ist von innen durch die Öffnungen 104 hindurchsteckbar.

Das Leuchtmittel 110 Versorgungskabel aufweist, an welchen eine Energiequelle 109 anschließbar ist.

Das Leuchtmittel 110 weist ferner einen Signaltransmitter 111 auf, wobei der Signaltransmitter 111 eingerichtet ist Steuersignale zur Steuerung des Leuchtmittels 110 zu empfangen.

**Fig. 2** zeigt eine schematische Darstellung eines Ausschnitts eines Dummy-Elements 100, wobei die Öffnung 104 als Sackloch mit Hinterschnitt ausgebildet ist. Das Dummy-Element 100 ist beispielsweise ein Kraftfahrzeug, wobei in Fig. 2 eine Schnittdarstellung des Frontbereichs dargestellt wird. Das Leuchtmittel 110 ist hier mittels eines Formschlusses in der Öffnung 104 befestigt.

Das Leuchtmittel 110 weist einen Leuchtkörper 201 und eine Platine 202 auf, wobei der Leuchtkörper 201 von der Platine 202 hervorragt. Eine entsprechende Ausführung des Leuchtmittels 110 kann auch in dem Durchgangsloch 104 aus Fig. 1 eingesetzt werden. Die Platine 202 ist insbesondere elastisch verformbar ausgebildet, sodass sich diese elastisch verformt.

Die Platine 202 ist innerhalb der Öffnung 104 des Dummykörpers 101 befestigt und der Leuchtkörper 201 ragt aus der Öffnung 104 heraus bzw. hervor. Mit anderen Worten kann die Öffnung 104 als Bohrung in den Dummykörper 101 vorgesehen werden, wobei die Platine 202 in der Bohrung vorliegt und der Leuchtkörper 201 im Bereich der Öffnung 104 vorliegt. Dabei kann der Leuchtkörper 201 innerhalb der Öffnung 104 vorliegen oder aus der Öffnung 104 herausragen.

Die Öffnung 104 weist in dem Dummykörper 101 einen Austrittsbereich 203, durch welchen der Leuchtkörper 201 nach außen ragt, und in dem Dummykörper 101 einen Befestigungsbereich 204, an welchen die Platine 202 vorliegt, auf. Der Öffnungsdurchmesser des Austrittsbereichs 203 ist kleiner als der Öffnungsdurchmesser des Befestigungsbereichs 204, sodass der Befestigungsbereich 204 einen Hinterschnitt bildet. Der Dummykörper 101 ist derart elastisch verformbar ausgebildet, dass die Platine 202, welche selbst elastisch verformbar sein kann, durch den Austrittsbereich 203 hindurchdrückbar ist und bei Vorliegen in dem Befestigungsbereich 204 einen Formschluss zur Befestigung des Leuchtmittels 110 ausbildet.

Zusätzlich kann gemäß einem Ausführungsbeispiel der vorliegenden Erfindung auf der dem Leuchtkörper 201 abgewandten Seite der Platine 202 eine Kühlvorrichtung thermisch gekoppelt sein. Die Kühlvorrichtung kann zum Beispiel eine Wasserkühlung, eine Luftkühlung oder eine thermoelektrische Kühlung (insbesondere eine Peltier-Element) aufweisen. Auch kann die Kühlvorrichtung eine Kombination verschiedener Kühlungen vorteilhaft aufweisen.

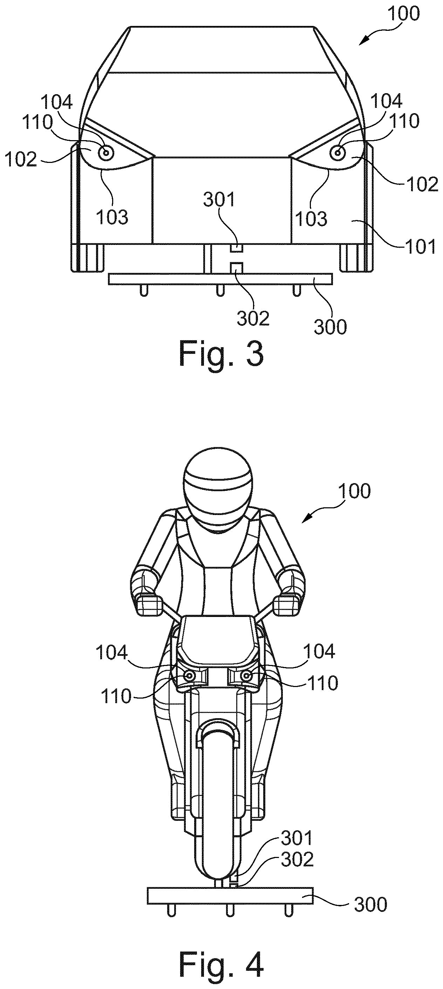

**Fig. 3** zeigt eine schematische Darstellung eines Frontbereichs eines Autodummys als Dummy-Element 100. Das Dummy-Element 100 ist auf einer verfahrbaren Plattform 300 befestigt.

Das Dummy-Element 100 weist eine erste Schnittstelle 301 und die verfahrbare Plattform 300 eine zweite Schnittstelle 302 auf, wobei die erste Schnittstelle 301 und die zweite Schnittstelle 302 korrespondieren zueinander derart ausgebildet sind, dass besondere Datensignale oder Energie zwischen der Plattform 300 und dem Dummy-Element 100 austauschbar sind.

**Fig. 4** zeigt eine schematische Darstellung eines Frontbereichs eines Motorraddummys als Dummy-Element 100. Das Dummy-Element 100 ist auf einer verfahrbaren Plattform 300 befestigt.

Das Dummy-Element 100 weist eine erste Schnittstelle 301 und die verfahrbare Plattform 300 eine zweite Schnittstelle 302 auf, wobei die erste Schnittstelle 301 und die zweite Schnittstelle 302 korrespondieren zueinander derart ausgebildet sind, dass besondere Datensignale oder Energie zwischen der Plattform 300 und dem Dummy-Element 100 austauschbar sind.

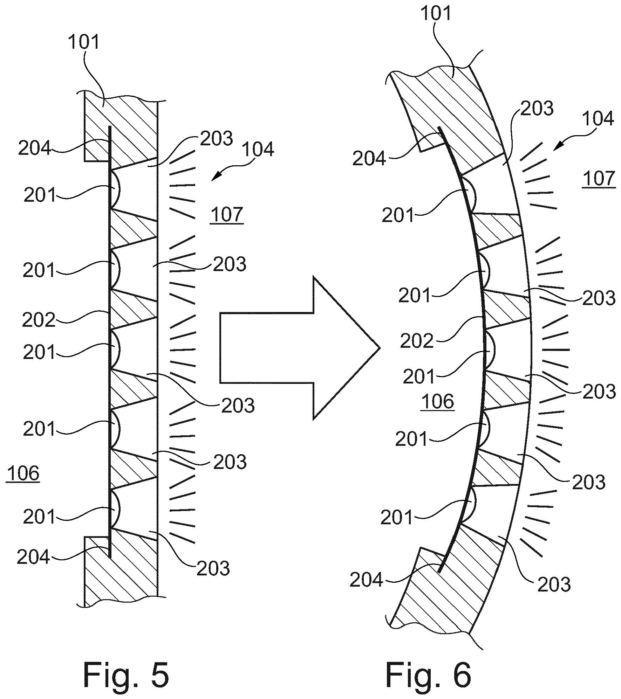

**Fig. 5** und **Fig. 6** zeigen einen Ausschnitt eines Dummy-Elements 100, wobei die Öffnung 104 mehrere Austrittsbereiche 203 für Leuchtkörper 201, insbesondere LEDs, aufweist. Die LEDs können somit einen vorbestimmten LED Array bilden. Die Austrittsbereiche 103 können dabei rund, oval oder geradlinig bzw. schlitzförmige ausgebildet werden. In Richtung Innenseite 106 ist die Platine 201 an dem Dummykörper 101 befestigt. Von der Platine 101 ragen die Leuchtkörper 201 in Richtung Umgebung 107. Die Leuchtkörper 201 können sich dabei in den Austrittsbereichen 203 befinden oder aus diesen in Richtung Umgebung 107 hervorragen. Der Befestigungsbereich 204 ist dabei schlitzförmige ausgebildet und hält die Platine 202 formschlüssig fest.

In Fig. 5 ist der Dummykörper 101 im nicht verformten Zustand dargestellt. In Fig. 6 ist der Dummykörper 101 im verformten Zustand dargestellt. Durch die Anzahl der Austrittsbereiche 203 in dem Dummykörper 101 ist dieser beispielsweise in diesem Bereich gut verformbar. Ferner ist die Platine 202 elastisch verformbar ausgebildet und kann sich mit dem Dummykörper 101 mitverformen. Somit wird mit dem Ausführungsbeispiel eine gute elastische Verformbarkeit des Dummykörpers 101 im Beleuchtungsbereich 102 geschaffen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

### Bezugszeichenliste:

- 100: Dummy-Element
- 101: Dummykörper
- 102: Beleuchtungsbereich
- 103: graphische Konturen
- 104: Öffnung
- 105: Oberfläche des Beleuchtungsbereichs
- 106: Innenraum
- 107: Umgebung
- 108: Versorgungskabel
- 109: Energiequelle
- 110: Leuchtmittel
- 111: Signaltransmitter

- 201: Leuchtkörper
- 202: Platine
- 203: Austrittsbereich
- 204: Befestigungsbereich

- 300: verfahrbare Plattform
- 301: erste Schnittstelle
- 302: zweite Schnittstelle

## Patentansprüche

1. Dummy-Element (100), insbesondere ein Dummy-Fahrzeug, aufweisend
einen Dummykörper (101) mit einem Beleuchtungsbereich (102), welcher eine zu simulierende Beleuchtungsvorrichtung eines zu simulierenden Elements, insbesondere eines Fahrzeugs, simuliert,
ein Leuchtmittel (110),
wobei der Dummykörper (101) im Beleuchtungsbereich (102) eine Öffnung (104) aufweist, in welcher das Leuchtmittel (110) angeordnet ist,
**dadurch gekennzeichnet, dass**
das Leuchtmittel (110) gehäuselos ausgebildet ist, wobei um das Leuchtmittel (110) selbst kein Gehäuse und kein Rahmen, welche in der Öffnung (104) vorliegen, ausgebildet sind.

2. Dummy-Element (100) gemäß Anspruch 1,
wobei der Beleuchtungsbereich (102) auf dessen Oberfläche (105) graphische Konturen (103) aufweist, welche insbesondere einen Rahmen der zu simulierenden Beleuchtungsvorrichtung abbilden.

3. Dummy-Element (100) gemäß Anspruch 1 oder 2,
wobei das Leuchtmittel (110) mittels einer Presspassung in der Öffnung (104) befestigt ist,
wobei die Öffnung (104) und das Leuchtmittel (110) eine Spielpassung ausbilden, sodass das Leuchtmittel (110) schubladenartig in die Öffnung (104) einschiebbar ist,
wobei das Leuchtmittel (110) mittels einer Klebeverbindung in der Öffnung (104) befestigt ist, und/oder
wobei das Leuchtmittel (110) mittels eines Formschlusses in der Öffnung (104) befestigt ist.

4. Dummy-Element (100) gemäß einem der Ansprüche 1 bis 3,
wobei das Leuchtmittel (110) einen Leuchtkörper (201) und eine Platine (202) aufweist,
wobei der Leuchtkörper (201) von der Platine (202) hervorragt.

5. Dummy-Element (100) gemäß Anspruch 4,
wobei die Platine (202) flexibel, insbesondere elastisch, verformbar ausgebildet ist, und/oder
wobei die Platine (202) in der Öffnung (104) des Dummykörpers (101) befestigt ist und der Leuchtkörper (201) aus der Öffnung (104) hervorragt.

6. Dummy-Element gemäß Anspruch 4 oder 5,
wobei die Öffnung (104) in dem Dummykörper (101) einen Austrittsbereich (203), durch welchen der Leuchtkörper (201) nach außen ragt, und in dem Dummykörper (101) einen Befestigungsbereich (204) aufweist, an welchen die Platine (202) vorliegt, oder
wobei die Öffnung (104) in dem Dummykörper (101) einen Austrittsbereich (203), in welchen der auf der Platine (202) befestigte Leuchtkörper (201), insbesondere LED, hineinragt und in dem Austrittsbereich (203) vollständig vorliegt, und in dem Dummykörper (101) einen Befestigungsbereich (204) aufweist, in welchem die Platine (202) vorliegt.

7. Dummy-Element (100) gemäß einem der Ansprüche 4 bis 6,
wobei der Öffnungsdurchmesser eines Austrittsbereichs (203) kleiner ist als der Öffnungsdurchmesser des Befestigungsbereichs (204), sodass der Befestigungsbereich (204) einen Hinterschnitt bildet,
wobei der Dummykörper (101) derart elastisch verformbar ausgebildet ist, dass die Platine (202) durch den Austrittsbereich (203) hindurchdrückbar ist und bei Vorliegen in dem Befestigungsbereich (204) einen Formschluss zur Befestigung des Leuchtmittels (110) ausbildet, und/oder
wobei das Leuchtmittel (110) mehrere Leuchtkörper (201), insbesondere LEDs, aufweist, die an der Platine (202) gekoppelt sind,
wobei die Öffnung (104) in dem Dummykörper (101) mehrere Austrittsbereiche (203) aufweist,
wobei in jedem Austrittsbereich (203) einer der Leuchtkörper (201) angeordnet ist.

8. Dummy-Element (100) gemäß einem der Ansprüche 4 bis 7, ferner aufweisend
eine Kühlvorrichtung
wobei auf der dem Leuchtkörper (201) abgewandten Seite der Platine (202) die Kühlvorrichtung thermisch gekoppelt ist,
wobei die Kühlvorrichtung insbesondere aufweist zumindest eine aus der Gruppe von:
eine Wasserkühlung;
eine Luftkühlung; und
eine thermoelektrische Kühlung, insbesondere eine Peltier-Element.

9. Dummy-Element (100) gemäß einem der Ansprüche 1 bis 8,
wobei die Öffnung (104) eine Durchgangsöffnung ist und einen Innenbereich des Dummykörpers (101) mit der Oberfläche (105) des Beleuchtungsbereichs (102) verbindet,
wobei das Leuchtmittel (110) von innen durch die Öffnungen (104) hindurchsteckbar ist.

10. Dummy-Element (100) gemäß einem der Ansprüche 1 bis 9,
wobei das Leuchtmittel (110) eine LED, insbesondere eine LED Matrix, aufweist.

11. Dummy-Element (100) gemäß einem der Ansprüche 1 bis 10,
wobei der Dummykörper (101) ein geschäumter Kunststoff ist.

12. Dummy-Element (100) gemäß einem der Ansprüche 1 bis 11,
wobei die graphischen Konturen (103) mittels eines Farbmittels auf der Oberfläche (105) des Beleuchtungsbereichs (102) aufgetragen sind, und/oder wobei die graphischen Konturen (103) mittels Aufklebern auf der Oberfläche (105) des Beleuchtungsbereichs (102) aufgetragen sind.

13. Dummy-Element (100) gemäß einem der Ansprüche 1 bis 12,
wobei das Leuchtmittel (110) Versorgungskabel (108) aufweist, an welchen eine Energiequelle (109) anschließbar ist.
wobei das Leuchtmittel (110) insbesondere eine Batterie als Energiequelle (109) aufweist.

14. Dummy-Element (100) gemäß einem der Ansprüche 1 bis 13, ferner aufweisend zumindest eines der folgenden Merkmale:
wobei das Leuchtmittel (110) eine Induktionsspule aufweist, mittels welcher Energie für das Leuchtmittel (110) zuführbar ist,
wobei das Leuchtmittel (110) einen Signaltransmitter (111) aufweist, wobei der Signaltransmitter (111) eingerichtet ist Steuersignale zur Steuerung des Leuchtmittels (110) zu empfangen,
wobei das Leuchtmittel (110) einen Beschleunigungssensor aufweist, sodass Beschleunigungen und Verzögerungen messbar sind.

15. System zum Bewegen eines Dummy-Elements (100), das System aufweisend
ein Dummy-Element (100) gemäß einem der Ansprüche 1 bis 14,
eine verfahrbare Plattform (300),
wobei das Dummy-Element (100) auf der verfahrbaren Plattform (300) befestigt ist,
wobei das Dummy-Element (100) insbesondere eine erste Schnittstelle (301) und die verfahrbare Plattform (300) insbesondere eine zweite Schnittstelle (302) aufweist,
wobei die erste Schnittstelle (301) und die zweite Schnittstelle (302) korrespondieren zueinander derart ausgebildet sind, dass besondere Datensignale oder Energie zwischen der Plattform (300) und dem Dummy-Element (100) austauschbar sind.

## Claims

1. A dummy element (100), in particular a dummy vehicle, comprising
a dummy body (101) having an illumination region (102) which simulates an illumination device to be simulated of an element to be simulated, in particular of a vehicle,
a lighting means (110),
wherein the dummy body (101) in the illumination region (102) comprises an opening (104) in which the lighting means (110) is arranged,
**characterized in that**
the lighting means (110) is formed without a housing, wherein no housing and no frame which are present in the opening (104) are formed around the lighting means (110) itself.

2. The dummy element (100) according to claim 1,
wherein the illumination region (102) on the surface (105) thereof comprises graphic contours (103) which in particular image a frame of the illumination device to be simulated.

3. The dummy element (100) according to claim 1 or 2,
wherein the lighting means (110) is fastened in the opening (104) by means of a press fit,
wherein the opening (104) and the lighting means (110) form a clearance fit, so that the lighting means (110) can be pushed into the opening (104) in a drawer-like manner,
wherein the lighting means (110) is fastened in the opening (104) by means of an adhesive connection, and/or
wherein the lighting means (110) is fastened in the opening (104) by means of a form fit.

4. The dummy element (100) according to any one of the claims 1 to 3,
wherein the lighting means (110) comprises a lighting body (201) and a circuit board (202),
wherein the lighting body (201) protrudes from the circuit board (202).

5. The dummy element (100) according to claim 4,
wherein the circuit board (202) is formed to be flexible, in particular elastically deformable, and/or
wherein the circuit board (202) is fastened in the opening (104) of the dummy body (101) and the lighting body (201) protrudes from the opening (104).

6. The dummy element according to claim 4 or 5,
wherein the opening (104) in the dummy body (101) comprises an exit region (203) through which the lighting body (201) protrudes to the outside, and in the dummy body (101) a fastening region (204) on which the circuit board (202) is present, or
wherein the opening (104) in the dummy body (101) comprises an exit region (203) into which the lighting body (201), in particular LED, fastened on the circuit board (202) protrudes and is present completely in the exit region (203), and in the dummy body (101) a fastening region (204) in which the circuit board (202) is present.

7. The dummy element (100) according to any one of the claims 4 to 6,
wherein the opening diameter of an exit region (203) is smaller than the opening diameter of the fastening region (204), so that the fastening region (204) forms an undercut,
wherein the dummy body (101) is configured to be elastically deformable such that the circuit board (202) can be pushed through the exit region (203) and, when present in the fastening region (204), forms a form fit for fastening the lighting means (110), and/or
wherein the lighting means (110) comprises a plurality of lighting bodies (201), in particular LEDs, which are coupled to the circuit board (202),
wherein the opening (104) in the dummy body (101) comprises a plurality of exit regions (203),
wherein one of the lighting bodies (201) is arranged in each exit region (203).

8. The dummy element (100) according to any one of the claims 4 to 7, further comprising
a cooling device,
wherein the cooling device is thermally coupled on the side of the circuit board (202) facing away from the lighting body (201),
wherein the cooling device in particular comprises at least one from the group of:
a water cooling;
an air cooling; and
a thermoelectric cooling, in particular a Peltier element.

9. The dummy element (100) according to any one of the claims 1 to 8,
wherein the opening (104) is a through opening and connects an inner region of the dummy body (101) to the surface (105) of the illumination region (102),
wherein the lighting means (110) can be inserted through the openings (104) from the inside.

10. The dummy element (100) according to any one of the claims 1 to 9,
wherein the lighting means (110) comprises an LED, in particular an LED matrix.

11. The dummy element (100) according to any one of the claims 1 to 10,
wherein the dummy body (101) is a foamed plastic.

12. The dummy element (100) according to any one of the claims 1 to 11,
wherein the graphic contours (103) are applied to the surface (105) of the illumination region (102) by means of a colorant, and/or
wherein the graphic contours (103) are applied to the surface (105) of the illumination region (102) by means of stickers.

13. The dummy element (100) according to any one of the claims 1 to 12,
wherein the lighting means (110) comprises supply cables (108) to which an energy source (109) can be connected.
wherein the lighting means (110) comprises in particular a battery as energy source (109).

14. The dummy element (100) according to any one of the claims 1 to 13, further comprising at least one of the following features:
wherein the lighting means (110) comprises an induction coil by means of which energy for the lighting means (110) can be supplied,
wherein the lighting means (110) comprises a signal transmitter (111), wherein the signal transmitter (111) is configured to receive control signals for controlling the lighting means (110),
wherein the lighting means (110) comprises an acceleration sensor, so that accelerations and decelerations can be measured.

15. A system for moving a dummy element (100), the system comprising
a dummy element (100) according to any one of the claims 1 to 14,
a movable platform (300),
wherein the dummy element (100) is fastened on the movable platform (300), wherein the dummy element (100) in particular comprises a first interface (301) and the movable platform (300) in particular comprises a second interface (302), wherein the first interface (301) and the second interface (302) are formed to correspond to each other such that special data signals or energy can be exchanged between the platform (300) and the dummy element (100).

## Revendications

1. Élément factice (100), en particulier véhicule factice, présentant
un corps factice (101) comprenant une région d'éclairage (102) simulant un dispositif d'éclairage à simuler d'un élément, en particulier d'un véhicule, à simuler,
un moyen d'éclairage (110),
dans lequel le corps factice (101) présente dans la région d'éclairage (102) un orifice (104) dans lequel est agencé le moyen d'éclairage (110),
**caractérisé en ce que**
le moyen d'éclairage (110) est réalisé sans enveloppe, aucune enveloppe et aucun cadre présent dans l'orifice (104) n'étant formé(e) autour du moyen d'éclairage (110) proprement dit.

2. Élément factice (100) selon la revendication 1,
dans lequel la région d'éclairage (102) présente sur sa surface (105) des contours graphiques (103) qui représentent en particulier un cadre du dispositif d'éclairage à simuler.

3. Élément factice (100) selon la revendication 1 ou 2,
dans lequel le moyen d'éclairage (110) est fixé dans l'orifice (104) au moyen d'un frettage,
dans lequel l'orifice (104) et le moyen d'éclairage (110) forment un ajustement de dégagement, de sorte que le moyen d'éclairage (110) peut être inséré dans l'orifice (104) à la manière d'un tiroir,
dans lequel le moyen d'éclairage (110) est fixé dans l'orifice (104) au moyen d'une liaison adhésive, et/ou
dans lequel le moyen d'éclairage (110) est fixé dans l'orifice (104) au moyen d'un verrouillage par complémentarité de forme.

4. Élément factice (100) selon l'une quelconque des revendications 1 à 3,
dans lequel le moyen d'éclairage (110) présente un corps lumineux (201) et une carte électronique (202),
dans lequel le corps lumineux (201) fait saillie par rapport à la carte électronique (202).

5. Élément factice (100) selon la revendication 4,
dans lequel la carte électronique (202) peut être déformée de manière flexible, en particulier de manière élastique, et/ou
dans lequel la carte électronique (202) est fixée dans l'orifice (104) du corps factice (101) et le corps lumineux (201) dépasse de l'orifice (104).

6. Élément factice selon la revendication 4 ou 5,
dans lequel l'orifice (104) présente dans le corps factice (101) une région de sortie (203) à travers laquelle le corps lumineux (201) fait saillie vers l'extérieur, et présente dans le corps factice (101) une région de fixation (204) au niveau de laquelle se trouve la carte électronique (202), ou
dans lequel l'orifice (104) présente dans le corps factice (101) une région de sortie (203) dans laquelle le corps lumineux (201), en particulier une DEL, fixé sur la carte électronique (202) fait saillie et est complètement présent dans la région de sortie (203), et présente dans le corps factice (101) une région de fixation (204) dans laquelle est présente la carte électronique (202).

7. Élément factice (100) selon l'une quelconque des revendications 4 à 6,
dans lequel le diamètre d'orifice d'une région de sortie (203) est inférieur au diamètre d'orifice de la région de fixation (204), de sorte que la région de fixation (204) forme une contre-dépouille,
dans lequel le corps factice (101) est réalisé de manière élastiquement déformable de telle manière que la carte électronique (202) peut être poussée à travers la région de sortie (203) et, en cas de présence dans la région de fixation (204), forme un verrouillage par complémentarité de forme permettant la fixation du moyen d'éclairage (110), et/ou dans lequel le moyen d'éclairage (110) présente plusieurs corps lumineux (201), en particulier des LED, qui sont couplés à la carte électronique (202),
dans lequel l'orifice (104) présente dans le corps factice (101) plusieurs région de sortie (203),
dans lequel un des corps lumineux (201) est agencé dans chaque région de sortie (203).

8. Élément factice (100) selon l'une quelconque des revendications 4 à 7, présentant en outre
un dispositif de refroidissement,
dans lequel le dispositif de refroidissement est couplé thermiquement sur le côté de la carte électronique (202) opposé au corps lumineux (201),
dans lequel le dispositif de refroidissement comprend en particulier au moins un dispositif choisi parmi le groupe comprenant :
un refroidissement par eau ;
un refroidissement par air ; et
un refroidissement thermoélectrique, en particulier un élément à effet Peltier.

9. Élément factice (100) selon l'une quelconque des revendications 1 à 8,
dans lequel l'orifice (104) est un orifice de passage et relie une région intérieure du corps factice (101) à la surface (105) de la région d'éclairage (102),
dans lequel le moyen d'éclairage (110) peut être inséré depuis l'intérieur à travers les orifices (104).

10. Élément factice (100) selon l'une quelconque des revendications 1 à 9,
dans lequel le moyen d'éclairage (110) présente une LED, en particulier une matrice LED.

11. Élément factice (100) selon l'une quelconque des revendications 1 à 10,
dans lequel le corps factice (101) est un plastique expansé.

12. Élément factice (100) selon l'une quelconque des revendications 1 à 11,
dans lequel les contours graphiques (103) sont appliqués sur la surface (105) de la région d'éclairage (102) au moyen d'un colorant, et/ou dans lequel les contours graphiques (103) sont appliqués sur la surface (105) de la région d'éclairage (102) au moyen d'autocollants.

13. Élément factice (100) selon l'une quelconque des revendications 1 à 12,
dans lequel le moyen d'éclairage (110) présente des câbles d'alimentation (108) auxquels une source d'énergie (109) peut être connectée.
dans lequel le moyen d'éclairage (110) présente en particulier une batterie faisant office de source d'énergie (109).

14. Élément factice (100) selon l'une quelconque des revendications 1 à 13, présentant au moins une des caractéristiques ci-dessous :
le moyen d'éclairage (110) présente une bobine d'induction au moyen de laquelle de l'énergie peut être fournie au moyen d'éclairage (110),
dans lequel le moyen d'éclairage (110) présente un émetteur de signal (111), dans lequel l'émetteur de signal (111) est conçu pour recevoir des signaux de commande permettant de commander le moyen d'éclairage (110),
le moyen d'éclairage (110) présente un capteur d'accélération, de sorte que des accélérations et des décélérations peuvent être mesurées.

15. Système permettant de déplacer un élément factice (100), le système comprenant
un élément factice (100) selon l'une quelconque des revendications 1 à 14,
une plate-forme mobile (300),
dans lequel l'élément factice (100) est fixé sur la plate-forme mobile (300),
dans lequel l'élément factice (100) présente en particulier une première interface (301) et la plate-forme mobile (300) présente en particulier une deuxième interface (302),
dans lequel la première interface (301) et la deuxième interface (302) sont réalisées de manière à correspondre l'une à l'autre de telle manière que des signaux de données particuliers ou de l'énergie peuvent être échangés entre la plate-forme (300) et l'élément factice (100).
